## Europäisches Patentamt

## European Patent Office

## Office européen des brevets

(19)

(11) Publication number: **0 124 170**
**B1**

(12) **EUROPEAN PATENT SPECIFICATION**

(45) Date of publication of patent specification: **18.03.87**

(51) Int. Cl.⁴: **B 23 K 9/12,** B 65 H 5/18

(21) Application number: **84200567.0**

(22) Date of filing: **19.04.84**

(54) Apparatus for axially feeding a wire.

(30) Priority: **27.04.83 NL 8301483**

(43) Date of publication of application:
**07.11.84 Bulletin 84/45**

(45) Publication of the grant of the patent:
**18.03.87 Bulletin 87/12**

(84) Designated Contracting States:
**CH DE FR GB IT LI NL SE**

(56) References cited:
**FR-A-2 450 139**

**SCHWEISSEN UND SCHNEIDEN '82,
VORTRÄGE DER GLEICHNAMIGEN GROSSEN
SCHWEISSTECHNISCHEN TAGUNG IN
BERLIN, 29th September - 1st October 1982,
pages 56-65, J.J.C. BUELENS et al.: "MIG-
/MAG-Schweissen und Plamsa.MIG-
Schweissen mit pulsierendem Drahvorschub"**

(73) Proprietor: **N.V. Philips' Gloeilampenfabrieken
Groenewoudseweg 1
NL-5621 BA Eindhoven (NL)**

(72) Inventor: **Buelens, Jozef Johannes Cornelis
c/o INT. OCTROOIBUREAU B.V. Prof. Holstlaan 6
NL-5656 AA Eindhoven (NL)**
Inventor: **Essers, Wilhelmus Gerardus
c/o INT. OCTROOIBUREAU B.V. Prof. Holstlaan 6
NL-5656 AA Eindhoven (NL)**
Inventor: **van Dijk, Cornelis Dionysius
c/o INT. OCTROOIBUREAU B.V. Prof. Holstlaan 6
NL-5656 AA Eindhoven (NL)**
Inventor: **Trapman, Jan
c/o INT. OCTROOIBUREAU B.V. Prof. Holstlaan 6
NL-5656 AA Eindhoven (NL)**

(74) Representative: **Schrijnemaekers, Hubert
Joannes Maria et al
Internationaal Octrooibureau B.V. Prof.
Holstlaan 6
NL-5656 AA Eindhoven (NL)**

EP 0 124 170 B1

## Description

The invention relates to an apparatus for axially feeding a wire, for example, a welding wire, which apparatus comprises a housing containing at least one reciprocable wire-gripping device, which has a plane of symmetry and comprises first and second wire guides which are located in two walls disposed opposite one another, through which wire guides the plane of symmetry extends, the wire-gripping device comprising two inclined walls which are arranged on opposite sides of said plane of symmetry and between which a chamber extends which widens in a direction from the first towards the second wire guide and which contains two spring-loaded rolling elements which cooperate one with each of said inclined walls.

Such a wire-feeding apparatus is known from the paper "Schweissen und Schneiden, '82, *pp.* 56—65; Deutscher Verband für Schweisstechnik e.V.". In the known apparatus the housing may comprise one or more reciprocable wire-gripping devices each comprising two rolling elements constructed as cylindrical pressure rollers. Such a wire-gripping device can be given a reciprocating movement in various ways, for example, by means of a swash plate which is coupled to a motor unit.

The known apparatus is used to feed a welding wire from a storage reel to a welding point. The welding wire passes through the wire-gripping device, the wire entering the device at the first wire guide and leaving the device at the second wire guide. Inside the wire-gripping device the wire passes between the pressure rollers. The wire is moved when the wire-gripping device performs a forward movement, the wire being clamped between the pressure rollers. When the wire-gripping device, upon termination of the forward movement, returns to its starting position, the clamping effect of the pressure rollers is smaller, so that the pressure rollers slide and/or roll back along the wire without moving it.

A disadvantage of the known wire-feeding apparatus is that the contact surfaces between the pressure rollers and the wire to be moved are comparatively small as a result of which, in the forward movement of the wire-gripping device, such high pressure forces occur that the wire is plastically deformed locally. A further disadvantage is that only after such deformation of the wire do the pressure rollers get sufficient grip on the wire to pull it along during the movement of the wire-gripping device. The movement of the wire during the forward movement of the wire-gripping device is consequently considerably smaller than the movement of the wire-gripping device itself.

It is the object of the invention to improve the wire-feeding apparaus of the kind mentioned in the opening paragraph in such manner that the said disadvantages do not occur.

For that purpose the wire-feeding apparatus according to the invention is characterized in that the wire-gripping device comprises two grippers which are arranged symmetrically with respect to the plane of symmetry and each of which, with on the side thereof remote from the plane of symmetry, cooperates with one of the rolling elements.

To move a wire by means of the apparatus according to the invention, one end of the wire is passed between the grippers of the block wire-gripping device *via* the first wire guide. When the wire-gripping device is then given a forward movement, the rolling elements roll on the tapering inclined walls and urge the grippers towards each other. As a result of the frictional forces occurring between the grippers and the wire, the wire is then pulled along with the wire-gripping device. In the return movement of this device the rolling elements roll in the opposite direction, so that the frictional forces between the grippers and the wire become smaller. The wire is not moved with the wire-gripping device during the latter's return movement but on the contrary slides out of the wire-gripping device at the second wire guide.

When the forward and return movements of the wire-gripping device succeed each other continuously, an intermittent axial feed of the wire occurs.

In the wire-feeding apparatus according to the invention the grippers grip the wire over a part of its length such that the pressure forces occurring are small. This has the advantage that any deformations of the wire occurring at the contact areas is usually of an elastic nature. A further advantage is that in the forward movement of the wire-gripping device the grippers rapidly get a grip on the wire. A favourable result of this is a high efficiency of the apparatus. Therefore the apparatus is very suitable for use with MIG and pland MIG welding systems.

The apparatus according to the invention may be used, for example, to feed a welding wire or cored wire electrodes from a storage reel to a welding point. The apparatus is suitable for use both in automatic and in semi-automatic welding devices.

The use of the apparatus according to the invention is not restricted to welding wire. Wires of another, metallic or non-metallic composition can also be fed by means of the apparatus. The apparatus furthermore is suitable not only for wires having a circular cross-section but also for wires having other cross-sections, for example, a rectangular cross-section. If desired, rod-shaped articles may be moved by means of an apparatus according to the invention.

A preferred embodiment of the apparatus according to the invention is characterized in that each of the grippers, in its side which faces the plane of symmetry, comprises a channel-like recess which extends in a direction from the first towards the second wire guide.

In this embodiment the channel-like recesses in the grippers complement one another to form an excellent support and guide for the wire to be fed. The cross-sectional shape of the channel-like recesses is preferably adapted to the cross-section of the wire.

An advantage of this embodiment is that during the forward movement of the wire-gripping device the grippers each contact the wire over a large area. As a result the grippers exert a firm grip on the wire in spite of small pressure forces.

Another preferred embodiment of the apparatus, according to the invention is characterized in that the channel-like recess widens in a semi-funnel-like manner at the end which is nearer the first wire guide.

Inserting a wire between the grippers of the wire-gripping device, for example, when the apparatus is started or when, during operation, the wire has to be changed, can easily be performed in this construction. It is only necessary for the wire to be threaded into the widened end of the recesses, after which a small axial force is sufficient to move the wire further into the wire-gripping device.

A favourable preferred embodiment of the apparatus according to the invention is characterized in that each of the grippers, on its side remote from the plane of symmetry, comprises a flange which on a side thereof which faces towards the second wire guide, cooperates with one of the rolling elements.

An advantage of this embodiment is that in a simple but efficacious manner the correct positioning of the rolling elements relative to the grippers is obtained and is maintained during operation.

The flange of each gripper is preferably located at a distance from that end of the gripper which is nearer the first wire guide.

An advantage of this is that in the return movement of the wire-gripping device the grippers do not perform a tilting movement relative to the wire. The favourable result of this is that in the forward movement of the wire-gripping device the wire is gripped very rapidly and pulled along by the grippers.

Another favourable preferred embodiment of the apparatus in accordance with the invention is characterized in that each of the grippers tapers in the form of a wedge in a direction towards the first wire guide, the side of the gripper remote from the plane of symmetry lying in a plane which encloses an angle $\alpha$ with the plane of symmetry, in which $1 \leq \alpha \leq 10°$, and each of the inclined walls of the block wire-gripping device lying in a plane which encloses an angle $\beta$ with the plane of symmetry, in which $8 \leq \beta \leq 24°$.

Favourable results have been obtained experimentally with angles $\alpha$ and $\beta$ which are within these limits indicated. Optimum results have been obtained with an angle $\alpha = 6°$ and an angle $\beta = 15°$.

A further embodiment of the apparatus according to the invention is characterized in that at least the first wire guide is constructed as a sleeve.

This embodiment has the advantage that the wire is readily guided and centred as it enters the wire-gripping device.

The invention further provides an apparatus which is characterized in that the housing contains a second wire-gripping device which is identical to the first wire-gripping device, and a guiding mechanism to which both wire-gripping devices are connected, the first wire guide of one wire-gripping device being situated opposite the second wire guide of the other wire-gripping device and the two wire-gripping devices being coupled to a driving unit reciprocated thereby in such a way that the two devices move in opposite directions simultaneously. With this arrangement a wire can be fed axially in pulsatory movements which succeed one another continuously. By varying the frequency with which the two wire-gripping devices reciprocate, the mean speed of the wire can be adjusted to any desired value.

Embodiments of the invention will now be described in greater detail with reference to the drawings, in which

Fig. 1 shows diagrammatically a wire-gripping apparatus according to the invention having two wire-gripping devices,

Fig. 2 is an axial sectional view of an embodiment of one of the wire-gripping devices of the apparatus shown in Figure 1,

Fig. 3 is a sectional view of the wire-gripping device shown in Fig. 2, taken on the line III—III in Fig. 2,

Fig. 4 is a part-sectional plan view of an embodiment of the apparatus in accordance with the invention,

Fig. 5 is a side elevation, partly in section, of the apparaus shown in Figure 4, the section being taken on the line V—V in Fig. 4, and

Fig. 6 is an end elevation, partly in section, of the apparatus shown in Fig. 4, the section being taken on the line VI—VI in Fig. 4.

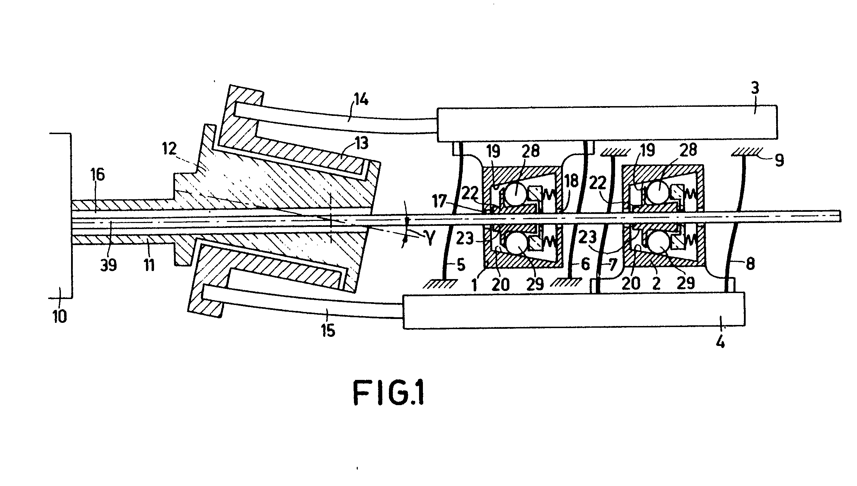

The wire-feeding apparatus according to the invention shown diagrammatically in Figure 1 comprises two wire-gripping devices 1 and 2 which are of identical construction and are each connected to slides 3 and 4, respectively. Each of the slides 3 and 4 is guided by a pair of leaf springs 5, 6 and 7, 8, respectively, of a guiding mechanism. The leaf springs 5, 6, 7 and 8 are connected to a housing 9. The apparatus further comprises a driving unit 10 having a driving shaft 11. The driving shaft 11 comprises a shaft portion 12 the centre line of which encloses an acute angle $\gamma$ with the centre line of the driving shaft 11. The angle $\gamma$ is preferably $\leq 15°$. A wobble element 13 is journalled on the shaft portion 12 so that the latter can rotate relatively to the wobble element. Two hinged joints 14 and 15 are connected to the wobble element at diametrically opposed points thereon. The hinged joints 14 and 15 are also connected to the slides 3 and 4, respectively. A bore 16 extends through the driving shaft 11 and through the shaft portion 12.

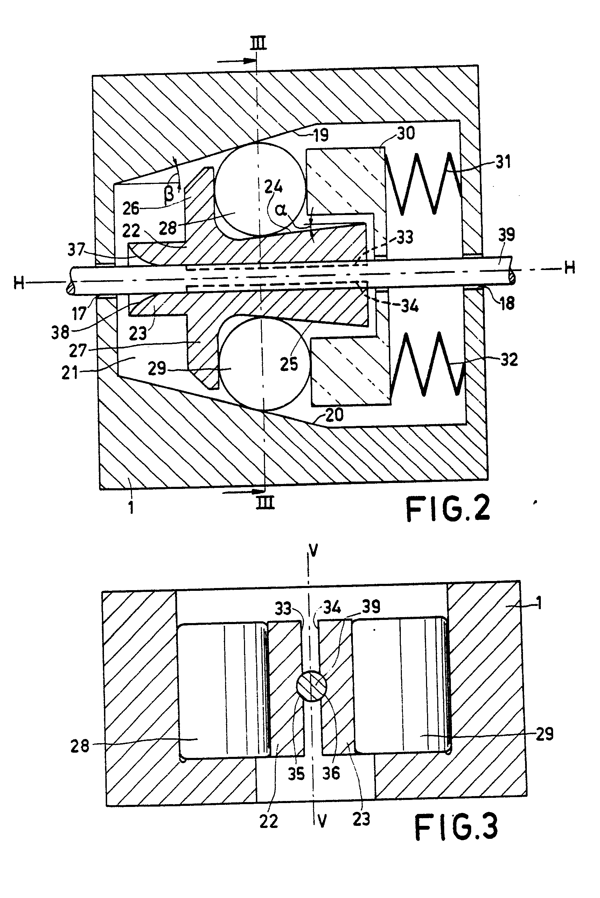

The construction of the identical wire-gripping devices 2 will be described in detail with reference to Figures 2 and 3 which show the wire-gripping device 1 on an enlarged scale. This device comprises a first wire guide 17 and a second wire guide 18 and has a plane of symmetry which passes through the two wire guides 17 and 18 and is perpendicular to the plane of the drawing.

In Figures 2 and 3 the plane of symmetry is represented by the lines H—H and V—V.

The wire-gripping device 1 has inclined walls 19 and 20, respectively, on opposite sides of the plane of symmetry. The inclined walls 19 and 20 lie in planes which each enclose an angle β with the plane of symmetry. The angle β is preferably ≥ 8° and ≤ 24°. A chamber 21 in which wedge-shaped grippers 22 and 23, respectively, are accommodated on opposite sides of the plane of symmetry extends between the walls 19 and 20.

On their sides 24 and 25, respectively, which are remote from the plane of symmetry the grippers 22 and 23 comprise flanges 26 and 27, respectively. Each of the sides 24 and 25 lies in a plane which encloses an angle α with the plane of symmetry. Preferably 1 ≤ α ≤ 10°.

Two rolling elements 28 and 29 on which two springs 31 and 32 act *via* a pressure member 30 are also accommodated in the chamber 21. Of course, one centrally arranged spring may alternatively be used. The rolling element 28 cooperates on the one hand with the inclined wall 19 and on the other hand with the side 24 and the flange 26 of the gripper 22. Similarly, the rolling element 29 cooperates with the inclined wall 20 and with the side 25 and the flange 27 of the gripper 23.

The flanges 26 and 27 preferably have a shape, for example the shape shown in Figure 2, such that the area of contact with the rolling elements 28 and 29 is small.

The sides 33 and 34 of the grippers 22 and 23 which face the plane of symmetry may have smooth surfaces or they may be roughened. The sides 33 and 34 preferably comprise channel-like recesses 35 and 36, respectively, which are widened at their ends 37 and 38, respectively, which are nearer the first wire guide 17. The channel-like recesses 35 and 36 may have smooth walls or they may be roughened at least over a part of their length, for example, by knurls each extending transversely of the recess.

The wire-gripping devices 1 and 2 are so positioned relative to each other that the first wire guide 17 of the wire-gripping device 2 is disposed opposite the second wire guide 18 of the wire-gripping device 1, as is shown in Figure 1.

In the operating condition the above apparatus, a wire 39, is threaded through the wire-gripping devices 1 and 2 *via* the bore 16. When the driving shaft 11 rotates, the wobble element 13 performs a wobbling, non-rotating movement which is converted by the hinged joints 14 and 15 into reciprocating movements of the slides 3 and 4 such that the wire-gripping devices 1 and 2 are moved in opposite directions simultaneously. When the wire-gripping device 1 performs a forward movement, that is a movement in which the wire-gripping device moves away from the driving unit 10, the rolling elements 28 and 29 in the wire-gripping device 1 roll on the inclined walls 19 and 20 in a direction such that they move towards each other and urge the grippers 22 and 23 against the wire 39 which is thereby gripped and pulled along with the wire-gripping device 1. In the meantime the wire-gripping device 2 moves in the opposite direction, the grippers 22 and 23 of this device 2 sliding back along the wire. Upon termination of the forward movement of the wire-gripping device 1, the wire-gripping device 2 begins its forward movement, in which the wire is pulled along with the wire-gripping device 2 in the same manner as described for the wire-gripping device 1. In the meantime the wire-gripping device 1 performs its return movement, in which the grippers 22 and 23 of this device 1 slide back along the wire. When the movements of the two wire-gripping devices 1 and 2 succeed each other continuously, the wire is moved in the axial direction in a pulsatory manner.

The apparatus according to the invention is suitable for feeding wires of different diameters, without it being necessary to change components of the device. Nor is it necessary to adjust the device differently. The rolling elements 28 and 29 of the wire-gripping devices 1 and 2 in combination with the inclined walls 19 and 20 permit a variable spacing between the grippers 22 and 23. As a result of this, when a wire is threaded through the wire-gripping devices the grippers 22 and 23 automatically assume the positions associated with the diameter of the wire.

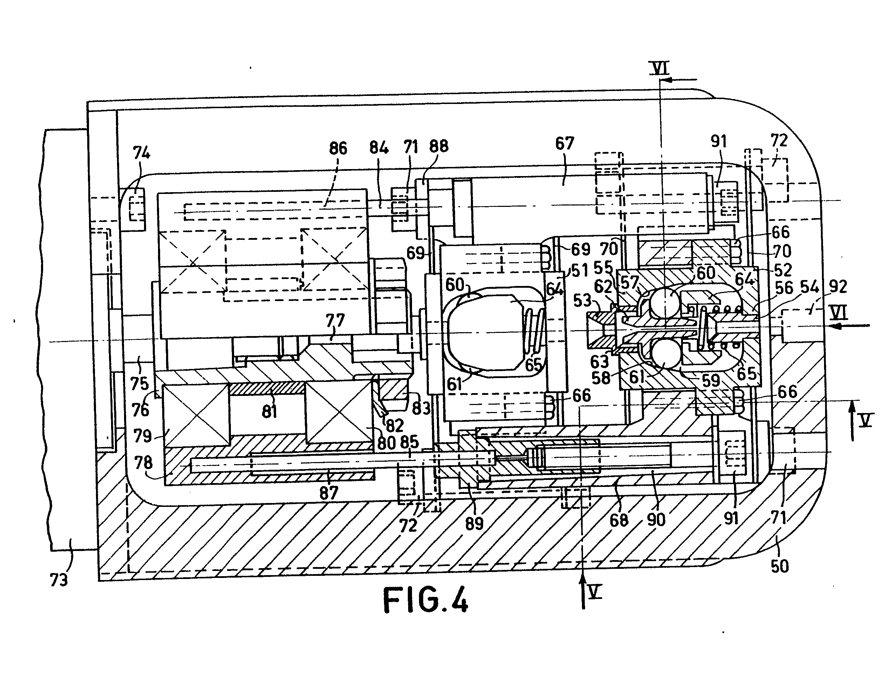

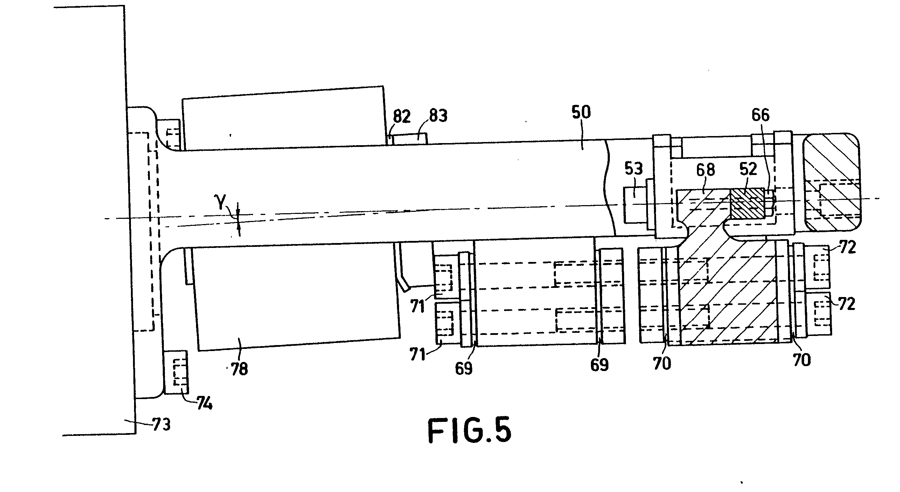

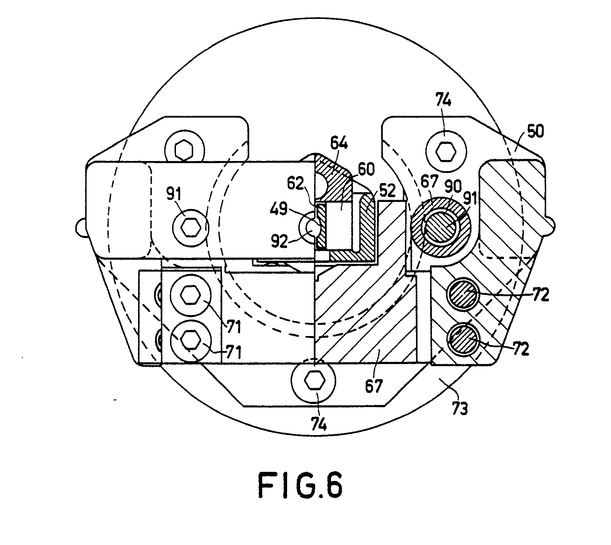

Figures 4, 5 and 6 show a practical embodiment of the wire-feeding apparatus in accordance with the invention. The embodiment comprises a housing 50 having two reciprocable wire-gripping devices 51 and 52 arranged one behind the other. The devices 51 and 52, which are identical to each other, have the same construction in principle as that described with reference to Figures 1, 2 and 3. It will therefore suffice to indicate only the more important components of the wire-gripping devices 51 and 52. Each of these devices comprises first and second wire guides which are constructed as sleeves 53 and 54, respectively. The sleeve 53 is disposed in a wall 55 and the sleeve 54 in the opposite wall 56. Both wire-gripping devices 51 and 52 comprise two inclined walls 57 and 58, between which a chamber 59 extends. Two cylindrical rolling elements 60 and 61, two grippers 62 and 63, a pressure member 64 and a spring 65 are accommodated in the chamber 59. The grippers 62 and 63 partly extend into the sleeve 53 and in their sides which face one another are each formed with a channel-like recess 49 which widens in a semi-funnel-like manner at the end which is nearer the sleeve 53. In this embodiment the angle α = 6° and angle β = 15°.

The wire-gripping devices 51 and 52 are connected to slides 67 and 68, respectively, by volts 66. The slides 67 and 68 are connected to the housing 50 by two pairs of leaf springs 69 and 70, respectively, made of stainless steel. The leaf springs 69 and 70 are connected to the slides 67 and 78 by bolts 71 and to the housing 50 by bolts 72.

The wire-gripping devices 51 and 52 are so positioned relative to each other that the sleeves 53 and 54 of the two devices are coaxial with each other.

The apparatus further comprises an electric motor unit 73 which is connected to the housing 50 by bolts 74. The motor unit 73 has a driving shaft 75 which is in an axial alignment with the sleeves 53 of the wire-gripping devices 51 and 52. A shaft portion 76, the centre line of which intersects the centre line of the driving shaft 75 at an angle γ of 2°, is fixed on the driving shaft 75. A bore 77 extends through the driving shaft 75 and the shaft portion 76. A wobble element 78 is journalled on the shaft portion 76 through bearing means comprising two pre-stressed ball bearings 79 and 80, between which a ring 81 is provided. Of course, other types of bearings may alternatively be used, for example, angular contact bearings and sliding bearings. The bearings are sealed by a cover ring 82 which is held in place by a locking nut 83 screwed on the shaft portion 76.

Two resiliently rods 84 and 85 of high-speed steel connected at one end to the wobble element 78 at diametrically opposed points thereon and at the other end to the slides 67 and 68, respectively, constitute hinged joints between the wobble element 78 and the slides 67 and 68. The rods 84 and 85 are secured with a force fit in bores 86 and 87, respectively, in the wobble element 78 by means of a force fit. The rods 84 and 85 are similarly secured to connection elements 88 and 89, respectively which connection elements are received in axially extending bores 90 in the slides 67 and 68 and are fixed therein by bolts 91 which are screwed into the connection elements 88 and 89. In an end wall of the housing 50 opposite the wire-gripping device 52 there is an aperture 92 through which the wire leaves the housing 50.

This embodiment of the apparatus in accordance with the invention is suitable for feeding wires of different diameters between 0.8 and 1.6 mm without any alteration of the apparatus being necessary. At the angle γ of 2° already mentioned, each wire-gripping device 51 and 52 travels 1.5 mm in each forward movement and in each return movement. The speed of rotation of the driving shaft 75 will usually be in the range from 0—100 revolutions per second. In some welding processes, for example gas-arc welding and submerged welding, welding wires having a larger diameter are used. The wire-gripping devices can be appropriately dimensioned to handle such wires.

**Claims**

1. An apparatus for axially feeding a wire (39), which apparatus comprises a housing containing at least one reciprocable wire-gripping device (1, 2) which has a plane of symmetry (H—H) and comprises first and second wire guides (17, 18) which are located in two walls disposed opposite one another, through which wire guides the plane of symmetry (H—H) extends, the wire-gripping device comprising two inclined walls (19, 20) which are arranged on opposite sides of said plane of symmetry and between which a chamber (21) extends which widens in a direction from the first towards the second wire guide and which contains two spring-loaded rolling elements (28, 29) which cooperate one with each of said inclined walls (19, 20), characterized in that the wire-gripping device (1,2) comprises two grippers (22, 23) which are arranged symmetrically with respect to the plane of symmetry (H—H) and each of which, on the side thereof remote from the plane of symmetry cooperates with one of the rolling elements (28, 29).

2. An apparatus as claimed in Claim 1, characterized in that each of the grippers (22, 23), in its side which faces the plane of symmetry, comprises a channel-like recess (35, 36) which extends in a direction from the first towards the second wire guide.

3. An apparatus as claimed in Claim 2, characterized in that the channel-like recess (35, 36) widens in a semi-funnel-like manner (37) at the end which is nearer the first wire guide (17).

4. An apparatus as claimed in Claim 1, 2 or 3, characterized in that each of the grippers (22, 23), on its side remote from the plane of symmetry, comprises a flange (26, 27) which on a side thereof which faces towards the second wire guide (18), cooperates with one of the rolling elements (28, 29).

5. An apparatus as claimed in Claim 4, characterized in that the flange (26, 27) of each gripper (22, 23) is located at a distance from that end of the gripper which is nearer the first wire guide (17).

6. An apparatus as claimed in any of the preceding Claims, characterized in that each of the grippers (22, 23) tapers in the form of a wedge (24, 25) in a direction towards the first wire guide (17), the side of the gripper remote from the plane of symmetry (H—H) lying in a plane which encloses an angle α with the plane of symmetry (H—H), in which $1 \leqslant α \leqslant 10°$, and each of the inclined walls (19, 20) of the wire-gripping device (1, 2) lying in a plane which encloses an angle β with the plane of symmetry, in which $8 \leqslant β \leqslant 24°$.

7. An apparatus as claimed in Claim 6, characterized in that angle $α = 6°$ and angle $β = 15°$.

8. An apparatus as claimed in any of the preceding Claims, characterized in that at least the first wire guide (17) is constructed as a sleeve (53).

9. An apparatus as claimed in any of the preceding Claims, characterized in that the housing contains a second wire-gripping device (2) which is identical to the first wire-gripping device (1) and a guiding mechanism to which both wire-gripping devices (1, 2) are connected, the first wire guide (17) of the second wire-gripping device (2) being situated opposite the second wire guide (18) of the first wire-gripping device (1), and the two wire-gripping devices (1, 2) being coupled to a driving unit (10) to be reciprocated thereby in such a way that the two devices move in opposite directions simultaneously.

## Patentansprüche

1. Apparat zum axialen Vorschieben eines Drahtes (39), wobei dieser Apparat ein Gehäuse aufweist. das wenigstens eine hin- und hergehende Drahtgreifvorrichtung (1, 2) aufweist, die eine Symmetrieebene (H—H) aufweist sowie ein erstes und ein zweites Drahtführungselement (17, 18), die in zwei einander gegenüber liegenden Wänden vorgesehen sind, wobei die Symmetrieebene (H—H) durch die Drahtführungselemente geht, wobei die Drahtgreifvorrichtung zwei schräge Wände (19, 20) aufweist, die auf einander gegenüber liegenden Seiten der Symmetrieebene (H—H) vorgesehen sind und zwischen denen sich eine Kammer (21) erstreckt, die sich in einer Richtung von dem ersten zu dem zweiten Drahtführungselement erweitert und die zwei federbelastete Rollelemente (28, 29) aufweist, die mit je einer der genannten schrägen Wände (19, 20) zusammenarbeiten, dadurch gekennzeichnet, dass die Drahtgreifvorrichtung (1, 2) zwei Greifelemente (22, 23) augweist, die symmetrisch zu der Symmetrieebene (H—H) vorgesehen sind, deren von der Symmetrieebene abgewandte Seite mit einem der Rollelemente (28, 29) zusammenarbeitet.

2. Apparat nach Anspruch 1, dadurch gekennzeichnet, dass jedes der Greifelemente (22, 23) in seiner Seite, die der Symmetrieebene zugewandt ist, eine kanalförmige Ausnehmung (35, 36) aufweist, die sich in einer Richtung von einem ersten zu einem zweiten Drahtführungselement erstreckt.

3. Apparat nach Anspruch 2, dadurch gekennzeichnet, dass die kanalförmige Ausnehmung (35, 36) an dem Ende in der Nähe des ersten Drahtführungselementes (17) sich halbtrichterförmig (37) erweitert.

4. Apparat nach Anspruch 1, 2 oder 3, dadurch gekennzeichnet, dass jedes der Greifelemente (22, 23) auf der von der Symmetrieebene abgewandten Seite einen Flansch (26, 27) aufweist, der auf der dem zweiten Drahtführungselement (18) zugewandten Seite mit einem der Rollelemente (28, 29) zusammenarbeitet.

5. Apparat nach Anspruch 4, dadurch gekennzeichnet, dass der Flansch (26, 27) jedes Greifelementes (22, 23) in einem Abstand von demjenigen Ende des Greifelementes liegt, das sich in der Nähe des ersten Drahtführungselementes (17) befindet.

6. Apparat nach einem der vorstehenden Ansprüche, dadurch gekennzeichnet, dass jedes der Greifelemente (22, 23) in einer Richtung zu dem ersten Drahtführungselement (17) in Form eines Keils (24, 25) ausgebildet ist, wobei die Seite des Greifelementes, die von der Symmetrieebene (H—H) abgewandt ist, in einer Ebene liegt, die mit der Symmetrieebene (H—H) einen Winkel α einschliesst, wobei $1 < α < 10°$ ist und wobei jede der schrägen Wänge (19, 20) der Drahtgreifvorrichtung (1, 2) in einer Ebene liegt, die mit der Symmetrieebene einen Winkel β einschliesst, wobei $8 < β < 24°$ ist.

7. Apparat nach Anspruch 6, dadurch gekennzeichnet, dass der Winkel α = 6° und der Winkel β = 15° ist.

8. Apparat nach einem der vorstehenden Ansprüche, dadurch gekennzeichnet, dass wenigstens das erste Drahtführungselement (17) wie eine Hülse (53) ausgebildet ist.

9. Apparat nach einem der vorstehenden Ansprüche, dadurch gekennzeichnet, dass das Gehäuse eine zweite Drahtgreifvorrichtung (2) aufweist, die der ersten Drahtgreifvorrichtung (1) entspricht, sowie einen Führungsmechanismus, mit dem die beiden Drahtgreifvorrichtungen (1, 2) verbunden sind, wobei das erste Drahtführungselement (17) der zweiten Drahtgreifvorrichtung (2) gegenüber dem zweiten Drahtführungselement (18) der ersten Drahtgreifvorrichtung (1) liegt und wobei die zwei Drahtgreifvorrichtungen (1, 2) mit einer Antriebseinheit (10) gekuppelt sind um derart hin- und hergehend bewegt zu werden, dass die zwei Vorrichtung in entgegengesetzten Richtungen gleichzeitig bewegen.

## Revendications

1. Appareil pour l'alimentation axiale d'un fil (39), appareil qui comporte un boîtier contenant au moins un dispositif de blocage de fil (1, 2) animé de mouvements de va-et-vient, présentant un plan de symétrie (H—H) et comportant des premier et deuxième guide-fils (17, 18), qui sont situés dans deux parois situées vis-à-vis l'une de l'autre, guide-fils par lesquels s'étend le plan de symétrie (H—H), le dispositif de blocage de fil comportant deux parois inclinées (19, 20) qui sont disposées des deux côtés opposés dudit plan de symétrie (H—H) et entre lesquelles s'étend une chambre (21), qui s'évase dans la direction allant du premier guide-fil vers le second guide-fil et qui contient deux éléments roulants (28, 29) soumis à une action d'élasticité et coopérant chacun avec l'une desdites parois inclinées (19, 20), caractérisé en ce que le dispositif de blocage de fil comporte deux organes préhenseurs (22, 23) qui sont disposés symétriquement par rapport au plan de symétrie (H—H) et dont chacun coopère par sa face éloignée du plan de symétrie avec l'un des éléments roulants (28, 29).

2. Appareil selon la revendication 1, caractérisé en ce que du côté proche du plan de symétrie, les organes préhenseurs (22, 23) comportent un évidement en forme de rainure (35, 36), qui est situé dans une direction s'étendant à partir du premier guide-fil vers le second guide-fil.

3. Appareil selon la revendication 2, caractérisé en ce que l'évidement en forme de rainure (35, 36) s'évase comme un demi-entonnoir (37) à l'extrémité située près du premier guide-fil (17).

4. Appareil selon la revendication 1, 2 ou 3, caractérisé en ce que du côté éloigné du plan de symétrie, chaque organe préhenseur (22, 23) comporte un flasque (26, 27) qui coopère avec l'un des éléments roulants (28, 29) du côté situé vis-à-vis du second guide-fil (18).

5. Appareil selon la revendication 4, caractérisé en ce que le flasque 26, 27 de chaque organe préhenseur 22, 23 se situe à une certaine distance de l'extrémité de l'organe préhenseur qui se situe plus près du premier guide-fil 17.

6. Appareil selon l'une des revendications précédentes, caractérisé en ce que chaque organe préhenseur (22, 23) s'étend sous forme d'un coin (24, 25) dans la direction du premier guide-fil (17), la face des organes préhenseurs éloignée du plan de symétrie (H—H) formant un angle $\alpha$ avec le plan de symétrie (H—H), dans laquelle $1° \leq \alpha \leq 10°$, et chaque paroi inclinée (19, 20) du dispositif de blocage de fil (1, 2) étant située dans un plan qui forme un angle $\beta$ avecc le plan de symétrie, dans laquelle $8° \leq \beta \leq 24°$.

7. Appareil selon la revendication 6, caractérisé en ce que l'angle $\alpha = 6°$ et l'angle $\beta = 15°$.

8. Appareil selon l'une des revendications précédentes caractérisé en ce qu'au moins le premier guide-fil (17) est réalisé comme une douille (53).

9. Appareil selon l'une des revendications précédentes, caractérisé en ce que le boîtier est muni d'un deuxième dispositif de blocage de fil (2), qui est identique au premier dispositif de blocage de fil (1), et d'un mécanisme de guidage auquel sont reliés les deux dispositifs de blocage de fil (1, 2), le premier guide-fil (17) du second dispositif de blocage de fil (2) étant situé vis-à-vis du deuxième guide-fil (18) du premier dispositif de blocage de fil (1) et les deux dispositifs de blocage de fil (1, 2) étant accouplés à une unité d'entraînement (10), qui assure un mouvement de va-et-vient de façon que les deux dispositifs se déplacent simultanément dans des sens opposés.

FIG.1

0 124 170

FIG.2

FIG.3

2

FIG.4

0 124 170

FIG.5

FIG.6